# EUROPEAN PATENT APPLICATION

(11) **EP 3 849 253 A1**
(43) Date of publication of application: **14.07.2021**
(21) Application number: 19857614.2
(22) Date of filing: 02.09.2019
(51) Int. Cl.: H04W 64/00

(54) **POSITIONING MESSAGE TRANSFERRING AND PROCESSING METHOD AND APPARATUS, AND TERMINAL**

(30) Priority: 05.09.2018 CN 201811030655
(71) Applicant: Datang Mobile Communications Equipment Co., Ltd., Beijing 100083 (CN)
(72) Inventor: ZHANG, Dajun, Beijing 100191 (CN); QUAN, Haiyang, Beijing 100191 (CN); AI, Ming, Beijing 100191 (CN)
(74) Representative: Burger, Hannes
(86) International application number: PCT/CN2019/103989
(87) International publication number: WO 2020/048422

(57) **Abstract**

The present disclosure provides a method, a device and a terminal for location message transmission processing. The method for location message transmission processing is applied to an access network equipment and includes: performing LTE Positioning Protocol (LPP) message interaction with a terminal through a local location management function.

## Description

### CROSS-REFERENCE TO RELATED APPLICATION

The present application claims the priority of Chinese Patent Application No. 201811030655.8 filed on September 5th, 2018, the contents of which are incorporated herein in their entirety by reference.

### TECHNICAL FIELD

The present disclosure relates to the field of communication technology, and in particular to a method, a device, and a terminal for location message transmission processing.

### BACKGROUND

Location based services (LBS) are services that acquire terminal location information via wireless communication networks or other positioning systems and provide users with various location-related information in combination with geographic information systems. Today, the outdoor positioning technology based on the Global Navigation Satellite System (GNSS) has been widely used in various fields. In addition, the high-precision positioning technology based on the 4G mobile communication network also effectively fills the gap in the positioning of satellite navigation systems. At present, the mobile communication network has entered the time of 5G technology. Thus, it is necessary to study a more concise and efficient 5G positioning network architecture. Compared with the 4G Long Term Evolution (LTE) architecture, this 5G positioning network architecture should have positioning requirements of higher precision and lower latency.

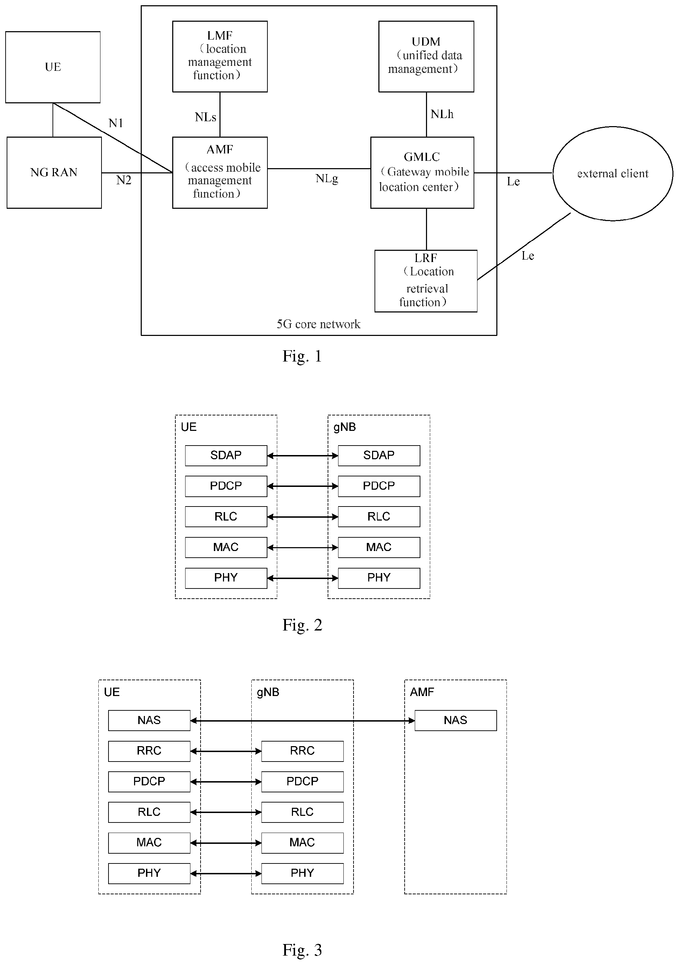

Fig. 1 shows a service-based 5G positioning service network architecture, in which the location management function (LMF) has the following functions: supporting location calculation, acquiring downlink location measurement results or location estimation from a User Equipment (UE, also called terminal), acquiring uplink location measurement results from the RAN side, and acquiring auxiliary data from the RAN side, etc.

In the related art, the Radio Access Network (RAN) side has no Non-Access Stratum (NAS) processing function. When the location management function sinks, in order to transmit the LTE Positioning Protocol (LPP) data packets, new transmission mechanisms need to be studied to satisfy the transmission services of location-related signaling.

### SUMMARY

The embodiments of the present disclosure provides a method, a device and a terminal for location message transmission processing so as to solve the problem that, since there is no NAS processing function on the RAN side, accurate transmission of LPP data packets cannot be realized when the positioning management function sinks.

In order to solve the above technical problem, an embodiment of the present disclosure provides a method for location message transmission processing, which is applied to an access network equipment, including:
performing LTE Positioning Protocol (LPP) message interaction with a terminal through a local location management function.

Optionally, the performing LTE Positioning Protocol (LPP) message interaction with the terminal includes:
receiving a first preset message sent by the terminal;
acquiring an LPP message in the first preset message when the first preset message contains non-access stratum information therein and the first preset message is related to the local location management function.

Optionally, the performing LTE Positioning Protocol (LPP) message interaction with the terminal includes:
generating an LPP message for performing location information interaction with the terminal;
generating a non-access stratum protocol data unit according to the LPP message;
containing the non-access stratum protocol data unit in a form of a container in a second preset message, and sending the second preset message to the terminal.

Optionally, the performing LTE Positioning Protocol (LPP) message interaction with the terminal includes:
receiving a first predefined message sent by the terminal, and acquiring an LPP message from the first predefined message.

Specifically, the first predefined message includes: an uplink location transfer message.

Optionally, the performing LTE Positioning Protocol (LPP) message interaction with the terminal includes:
generating an LPP message for performing location information interaction with the terminal;
containing the LPP message in a form of a container in a second predefined message, and sending the second predefined message to the terminal.

Specifically, the second predefined message includes: a downlink location transfer message.

Optionally, the performing LTE Positioning Protocol (LPP) message interaction with the terminal includes:
receiving a first preset message sent by the terminal;
acquiring an LPP message from the first preset message according to the terminal explicitly or implicitly indicating that the first preset message carries the LPP message therein.

Optionally, the performing LTE Positioning Protocol (LPP) message interaction with the terminal includes:
generating an LPP message for performing location information interaction with the terminal;
carrying the LPP message in a second preset message, and sending the second preset message to the terminal;
wherein the access network equipment explicitly or implicitly indicates that the second preset message carries the LPP message therein.

Optionally, the performing LTE Positioning Protocol (LPP) message interaction with the terminal includes:
receiving a first preset message sent by the terminal, the first preset message containing local location information indication information of a first preset bit therein;
acquiring an LPP message from the first preset message according to the local location information indication information of the first preset bit.

Optionally, the performing LTE Positioning Protocol (LPP) message interaction with the terminal includes:
generating an LPP message for performing location information interaction with the terminal;
packaging the LPP message in a non-access stratum protocol data unit;
containing the non-access stratum protocol data unit in a form of a container in a second preset message, and sending the second preset message to the terminal;
wherein the second preset message contains location information indication information of a second preset bit therein.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the method for location message transmission processing further includes:
in a process of connection establishment with a core network equipment, indicating for the core network equipment that the access network equipment supports the local location management function.

An embodiment of the present disclosure further provides a method for location message transmission processing applied to a terminal, including:
performing LTE Positioning Protocol (LPP) message interaction with an access network equipment.

Optionally, the performing LTE Positioning Protocol (LPP) message interaction with the access network equipment includes:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

Optionally, the performing LTE Positioning Protocol (LPP) message interaction with the access network equipment includes:
receiving a second preset message sent by the access network equipment;
acquiring an LPP message in the second preset message.

Optionally, the performing LTE Positioning Protocol (LPP) message interaction with the access network equipment includes:
generating an LPP message for performing location information interaction with the access network equipment;
containing the LPP message in a form of a container in a first predefined message, and sending the same to the access network equipment.

Specifically, the first predefined message includes: an uplink location transfer message.

Optionally, the performing LTE Positioning Protocol (LPP) message interaction with the access network equipment includes:
receiving a second predefined message sent by the access network equipment;
acquiring an LPP message from the second predefined message.

Specifically, the second predefined message includes: a downlink location transfer message.

Optionally, the performing LTE Positioning Protocol (LPP) message interaction with the access network equipment includes:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

Optionally, the performing LTE Positioning Protocol (LPP) message interaction with the access network equipment includes:
receiving a second preset message sent by the access network equipment;
acquiring an LPP message from the second preset message according to the access network equipment explicitly or implicitly indicating that the second preset message carries the LPP message therein.

Optionally, the performing LTE Positioning Protocol (LPP) message interaction with the access network equipment includes:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

Optionally, the performing LTE Positioning Protocol (LPP) message interaction with the access network equipment includes:
receiving a second preset message sent by the access network equipment, the second preset message containing location information indication information of a second preset bit therein;
parsing an LPP message in the second preset message according to the location information indication information of the second preset bit.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the method for location message transmission processing further includes:
sending location indication information to a core network equipment, the location indication information indicating whether the terminal supports a local location function.

An embodiment of the present disclosure further provides a method for location message transmission processing applied to a core network equipment, including:
acquiring location indication information and information that an access network equipment supports a local location management function;
determining a local location function entity used to perform location based service according to the location indication information and the information that the access network equipment supports the local location management function;
wherein the location indication information indicates whether a terminal supports a local location function.

An embodiment of the present disclosure further provides an access network equipment including a storage, a processor, and a program stored on the storage and capable of running on the processor; wherein the processor implements steps as follows when executing the program:
performing LTE Positioning Protocol (LPP) message interaction with a terminal through a local location management function.

Optionally, the processor implements steps as follows when executing the program:
receiving a first preset message sent by the terminal;
acquiring an LPP message in the first preset message when the first preset message contains non-access stratum information and the first preset message is related to the local location management function.

Optionally, the processor implements steps as follows when executing the program:
generating an LPP message for performing location information interaction with the terminal;
generating a non-access stratum protocol data unit according to the LPP message;
containing the non-access stratum protocol data unit in a form of a container in a second preset message, and sending the second preset message to the terminal.

Optionally, the processor implements steps as follows when executing the program:
receiving a first predefined message sent by the terminal, and acquiring an LPP message from the first predefined message.

Specifically, the first predefined message includes: an uplink location transfer message.

Optionally, the processor implements steps as follows when executing the program:
generating an LPP message for performing location information interaction with the terminal;
containing the LPP message in a form of a container in a second predefined message, and sending the second predefined message to the terminal.

Specifically, the second predefined message includes: a downlink location transfer message.

Optionally, the processor implements steps as follows when executing the program:
receiving a first preset message sent by the terminal;
acquiring an LPP message from the first preset message according to the terminal explicitly or implicitly indicating that the first preset message carries the LPP message therein.

Optionally, the processor implements steps as follows when executing the program:
generating an LPP message for performing location information interaction with the terminal;
carrying the LPP message in a second preset message, and sending the second preset message to the terminal;
wherein the access network equipment explicitly or implicitly indicates that the second preset message carries the LPP message therein.

Optionally, the processor implements steps as follows when executing the program:
receiving a first preset message sent by the terminal, the first preset message containing local location information indication information of a first preset bit therein;
acquiring an LPP message from the first preset message according to the local location information indication information of the first preset bit.

Optionally, the processor implements steps as follows when executing the program:
generating an LPP message for performing location information interaction with the terminal;
packaging the LPP message in a non-access stratum protocol data unit;
containing the non-access stratum protocol data unit in a form of a container in a second preset message, and sending the second preset message to the terminal;
wherein the second preset message contains location information indication information of a second preset bit therein.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the processor implements steps as follows when executing the program:
in a process of connection establishment with a core network equipment, indicating for the core network equipment that the access network equipment supports the local location management function.

An embodiment of the present disclosure further provides a terminal including a storage, a processor, and a program stored on the storage and capable of running on the processor; wherein the processor implements steps as follows when executing the program:
performing LTE Positioning Protocol (LPP) message interaction with an access network equipment.

Optionally, the processor implements steps as follows when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

Optionally, the processor implements steps as follows when executing the program:
receiving a second preset message sent by the access network equipment;
acquiring an LPP message in the second preset message.

Optionally, the processor implements steps as follows when executing the program:
generating an LPP message for performing location information interaction with the access network equipment;
containing the LPP message in a form of a container in a first predefined message, and sending the same to the access network equipment.

Specifically, the first predefined message includes: an uplink location transfer message.

Optionally, the processor implements steps as follows when executing the program:
receiving a second predefined message sent by the access network equipment;
acquiring an LPP message from the second predefined message.

Specifically, the second predefined message includes: a downlink location transfer message.

Optionally, the processor implements steps as follows when executing the program:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

Optionally, the processor implements steps as follows when executing the program:
receiving a second preset message sent by the access network equipment;
acquiring an LPP message from the second preset message according to the access network equipment explicitly or implicitly indicating that the second preset message carries the LPP message therein.

Optionally, the processor implements steps as follows when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

Optionally, the processor implements steps as follows when executing the program:
receiving a second preset message sent by the access network equipment, the second preset message containing location information indication information of a second preset bit therein;
parsing an LPP message in the second preset message according to the location information indication information of the second preset bit.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the processor implements steps as follows when executing the program:
sending location indication information to a core network equipment, the location indication information indicating whether the terminal supports a local location function.

An embodiment of the present disclosure further provides a core network equipment including a storage, a processor, and a program stored on the storage and capable of running on the processor; wherein the processor implements steps as follows when executing the program:
acquiring location indication information and information that an access network equipment supports a local location management function;
determining a local location function entity used to perform location based service according to the location indication information and the information that the access network equipment supports the local location management function;
wherein the location indication information indicates whether a terminal supports a local location function.

An embodiment of the present disclosure further provides a computer readable storage medium having a computer program stored thereon, the computer program implementing, when executed by a processor, the above method for location message transmission processing.

An embodiment of the present disclosure further provides an access network equipment including:
a first information interaction module configured to perform LTE Positioning Protocol (LPP) message interaction with a terminal through a local location management function.

An embodiment of the present disclosure further provides a terminal including:
a second information interaction module configured to perform LTE Positioning Protocol (LPP) message interaction with an access network equipment.

An embodiment of the present disclosure further provides a core network equipment including:
an acquisition module configured to acquire location indication information and information that an access network equipment supports a local location management function;
a determination module configured to determine a local location function entity used to perform location based service according to the location indication information and the information that the access network equipment supports the local location management function;
wherein the location indication information indicates whether a terminal supports a local location function.

The beneficial effects of the present disclosure are as follows:
The above solution can ensure that, on the basis of the 5G location management function sinking to the access network, it is possible to provide a more secure and reliable transmission mechanism for location based services. The communication process of this solution is simple and efficient, and can minimize the effect on the protocol stack.

### BRIEF DESCRIPTION OF THE DRAWINGS

In order to explain the technical solutions of the embodiments of the present disclosure more clearly, the accompanying drawings used in the description of the embodiments will be described briefly below. Obviously, the drawings in the following description are only some embodiments of the present disclosure. For those of ordinary skill in the art, other drawings may be obtained based on these drawings without creative labor.
Fig. 1 shows a service-based 5G positioning service network architecture;
Fig. 2 shows a schematic diagram of a protocol stack architecture of user plane;
Fig. 3 shows a schematic diagram of a protocol stack architecture of control plane;
Fig. 4 shows a schematic flowchart of a method for location message transmission processing applied to an access network equipment according to an embodiment of the present disclosure;
Fig. 5 shows a schematic diagram of a communication flow of capability reporting;
Fig. 6 shows a schematic flowchart of a method for location message transmission processing applied to a terminal according to an embodiment of the present disclosure;
Fig. 7 shows a schematic flowchart of a method for location message transmission processing applied to a core network equipment according to an embodiment of the present disclosure;
Fig. 8 shows a schematic diagram of modules of an access network equipment according to an embodiment of the present disclosure;
Fig. 9 shows a structural diagram of an access network equipment according to an embodiment of the present disclosure;
Fig. 10 shows a schematic diagram of modules of a terminal according to an embodiment of the present disclosure;
Fig. 11 shows a structural diagram of a terminal according to an embodiment of the present disclosure;
Fig. 12 shows a schematic diagram of modules of a core network equipment according to an embodiment of the present disclosure;
Fig. 13 shows a structural diagram of a core network equipment according to an embodiment of the present disclosure.

### DETAILED DESCRIPTION

The present disclosure will be described hereinafter in details in accordance with the drawings and specific embodiments in order that the objects, technical solutions and advantages of the present disclosure become clearer.

The background technologies related to the present disclosure are introduced as follows.

### (1) 5G mobile communication system

In the 5G system, most of the nodes on the network side are wiredly connected, that is, gNBs are connected with each other through a wired link, a gNB (NR NodeB) and a core network node, for example, the Access and Mobility Management Function (AMF), the User Plane Function (UPF), etc., are also connected by wired link.

### (2) 5G radio protocol architecture

The 5G basic user plane protocol layer includes Service Data Adaptation Protocol (SDAP), Packet Data Convergence Protocol (PDCP), Radio Link Control (RLC) and Medium Access Control (MAC), Physical layer (PHY). The control plane protocol layer includes Non-Access Stratum (NAS), Radio Resource Control (RRC), PDCP, RLC, MAC and PHY. The protocol stack of the user plane is shown in Fig. 2, and the protocol stack of the control plane is shown in Fig. 3.

In view of the problem that accurate transmission of LPP data packets cannot be realized when the positioning management function sinks since there is no NAS processing function on the RAN side, the present disclosure provides a method, a device, and a terminal for location message transmission processing.

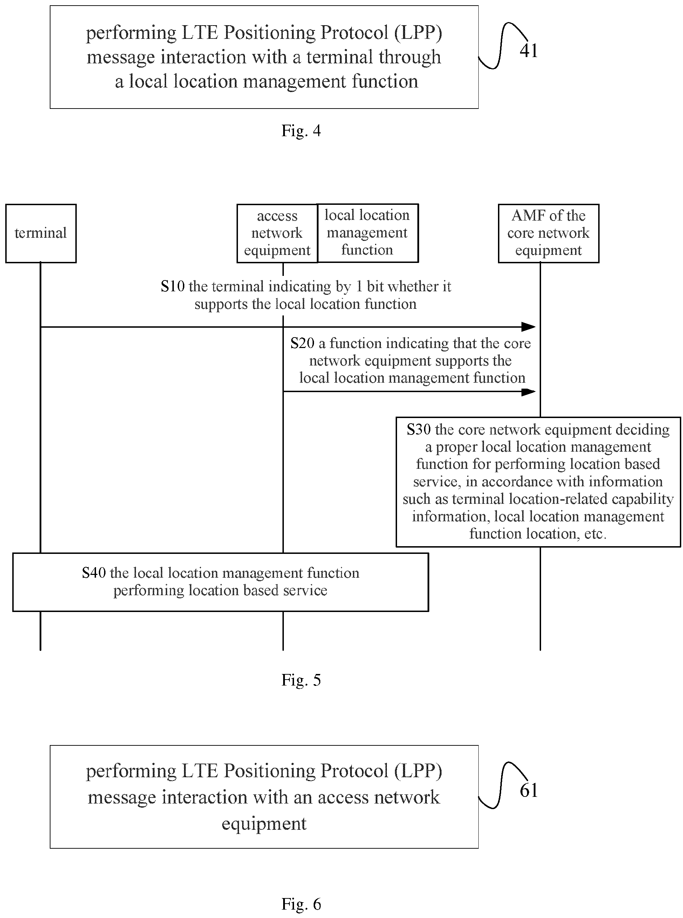

As shown in Fig. 4, a method for location message transmission processing according to an embodiment of the present disclosure, which is applied to an access network equipment, including:
Step 401, performing LTE Positioning Protocol (LPP) message interaction with a terminal through a local location management function.

It should be noted that, in the embodiment of the present disclosure, the location management function sinks to the access network equipment, that is, the location management function (local LMF) is located in the access network, for example, co-sited with 5G.

It should be noted that, the information interaction includes the interaction of uplink information and the interaction of downlink information. The main implementations of the present disclosure will be described from these two aspects as follows.

I. When the Local LMF needs to interact with the terminal for location information, a corresponding LPP message is generated and then is provided to the local non-access stratum (NAS) processing sub-function for processing, and the resulting NAS is then transmitted to the terminal through the SRB signaling bearer of the air interface. The terminal performs location processing, specifically, such as initiating uplink location measurement; or storing related location auxiliary information, etc.; if the terminal positioning capability information is requested, the subsequent positioning capability reporting process will be performed. On the contrary, if the radio resource control (RRC) information from the terminal contains the NAS information, it will be first provided to the local NAS processing sub-function for processing, and if it is non-Local LMF related information, it will be forwarded to the corresponding processing unit of the NG AP. Otherwise, it will be processed by the Local LMF accordingly. For example, if it is an uplink location measurement result, the location calculation will be performed based on such information; if it is auxiliary information request information, the subsequent transfer process for the auxiliary information will be initiated; and if it is terminal positioning capability information, related information will be stored.

### 1. Uplink processing

In this case, the terminal generates an LPP message for performing location information interaction with the access network equipment, packages the LPP message in a non-access stratum protocol data unit, contains the non-access stratum protocol data unit in a form of a container in a first preset message, and sends the first preset message to the access network equipment. The access network equipment receives the first preset message sent by the terminal, and acquires the LPP message in the first preset message when the first preset message contains non-access stratum information therein and the first preset message is related to the local location management function.

It should be noted that, the first preset message includes at least one of: an uplink information transfer message, an RRC setup complete message, and an RRC reconfiguration complete message.

The above specific communication process is as follows:
Step S11: the terminal generates a corresponding LPP message, and then packages the message in a non-access stratum protocol data unit (NAS PDU).
Step S12: the terminal forwards this NAS PDU to an RRC processing entity which contains this NAS PDU in a form of a container in a UL information transfer message, an RRC setup complete message, or an RRC reconfiguration complete message and sends the same to the access network equipment;
Step S13: the access network equipment receives this message, and first provides it to a local NAS processing sub-function for processing if this message contains NAS information therein;
Step S14: the local NAS processing sub-function determines whether the NAS information is a message related to the local LMF, and if it is, it will be processed by the local LMF accordingly, and the LPP message therein will be parsed for subsequent location-related processing; if this NAS information is not related to the local LMF, then it will be forwarded to the corresponding processing unit of the NG AP.
Step S15: as for the location processing, specifically, for example, if it is an uplink location measurement result, location calculation will be performed according to such information; if it is auxiliary information request information, a subsequent transfer process for the auxiliary information will be initiated; and if it is UE positioning capability information, related information will be stored.

### 2. Downlink processing

When the access network equipment needs to perform LPP message interaction with the terminal, it generates an LPP message for performing location information interaction with the terminal, generates a non-access stratum protocol data unit according to the LPP message, contains the non-access stratum protocol data unit in a form of a container in a second preset message, and sends the second preset message to the terminal; the terminal receives the second preset message sent by the access network equipment, and acquires the LPP message in the second preset message.

It should be noted that, the second preset message includes at least one of: a downlink information transfer message, an RRC setup message, and an RRC reconfiguration message.

The above specific communication process is as follows:
Step S21: when the local LMF needs to perform location information interaction with the terminal, it will generate a corresponding LPP message, and then provides this message to the local NAS processing sub-function for processing, thus generating the final NAS PDU;
Step S22: the access network equipment forwards this NAS PDU to an RRC processing entity which contains this NAS PDU in a form of a container in a DL information transfer message, an RRC setup message, or an RRC reconfiguration message and sends the same to the terminal through the SRB1/SRB2;
Step S23: the terminal parses the NAS PDU from the received message and provides it to the NAS processing unit for processing;
Step S24: the NAS processing unit parses the LPP message from the PDU and provides it to the location processing unit;
Step S25: the location processing unit perform subsequent location-related processing.

Specifically, for example: initiating uplink location measurement; or storing related location auxiliary information, etc.; if the terminal positioning capability information is requested, the subsequent positioning capability reporting process will be performed.

II. When the local location management function entity (not including the local NAS processing sub-function) needs to interact with the terminal for the location information, a corresponding LPP message is generated and then is directly provided to the RRC message processing function entity, and the RRC entity transmits it in a form of a contain to the terminal through a newly defined message such as a downlink location information transfer message; or bears it in a form of container in an existing message, such as the DL information transfer message or another message (e.g., the reconfiguration/setup message), and carries explicit or implicit indication as location-related information. Then, the terminal performs the location processing, specifically, for example, initiating uplink location measurement; or storing related location auxiliary information, etc.; if the terminal positioning capability information is requested, the subsequent positioning capability reporting process will be performed. On the contrary, if the RRC information from the terminal is a newly defined uplink dedicated message, such as the uplink location information transfer message, etc., the location information (the LPP data package) therein will be directly forwarded to the local location management function entity; or, if it is an existing message, the location information (the LPP data package) therein will be forwarded to the local location management function entity according to the explicit or implicit location information indication. Then, location processing is performed, specifically, for example, if it is an uplink location measurement result, location calculation will be performed according to such information; if it is auxiliary information request information, the subsequent transfer process for the auxiliary information will be initiated; and if it is terminal positioning capability information, related information will be stored.

### 1. Case 1

1.1) When the terminal needs to interact with the access network equipment for information, it generates an LPP message for performing location information interaction with the access network equipment, contains the LPP message in a form of a container in a first predefined message and sends the same to the access network equipment; the access network equipment receives the first predefined message sent by the terminal, and acquires the LPP message from the first predefined message.

It should be noted that the first predefined message includes: an uplink location transfer message.

The above specific communication process is as follows:
Step S31: the terminal directly provides the LPP message generated for the local location management function entity to the RRC message processing function entity;
Step S32: the RRC processing entity of the terminal contains this LPP message in a form of a container in a newly defined uplink dedicated message (i.e., the first predefined message), such as the uplink location information transfer message, and sends the same to the access network equipment;
Step S33: when receiving the newly defined uplink dedicated message, the access network equipment directly forwards the location information (an LPP data package) therein to the local location management function entity;
Step S34: the local LMF performs subsequent location-related processing;

Specifically, for example, if it is an uplink location measurement result, location calculation will be performed according to such information; if it is auxiliary information request information, the subsequent transfer process for the auxiliary information will be initiated; and if it is terminal positioning capability information, related information will be stored.

### 1.2) Downlink processing

When the access network equipment needs to interact with the terminal for information, it generates an LPP message for performing location information interaction with the terminal, contains the LPP message in a form of a container in a second predefined message and sends the second predefined message to the terminal; the terminal receives the second predefined message sent by the access network equipment, and acquires the LPP message from the second predefined message.

It should be noted that, the second predefined message includes: a downlink location transfer message.

The above specific communication process is as follows:
Step S41: when the local LMF needs to interact with the terminal for location information, it generates a corresponding LPP message and directly provides the same to the RRC message processing function entity;
Step S42: the RRC entity transmits the LPP message in a form of a container to the terminal through a newly defined downlink dedicated message (i.e., the second predefined message), such as the downlink location information transfer message, etc.;
Step S43: when the terminal receives the newly defined downlink dedicated message, the RRC processing unit of the terminal directly parses the LPP PDU and provides it to the location processing unit;
Step S44: the location processing unit performs subsequent location-related processing.

Specifically, for example: initiating uplink location measurement; or storing related location auxiliary information, etc.; if the UE positioning capability information is requested, the subsequent positioning capability reporting process will be performed.

### 2. Case 2

### 2.1) Uplink processing

When the terminal needs to interact with the access network equipment for information, it generates an LPP message for performing location information interaction with the access network equipment, packages the LPP message in a first preset message, and sends the first preset message to the access network equipment; it should be noted that, the terminal explicitly or implicitly indicates that the first preset message carries the LPP message therein. The access network equipment receives the first preset message sent by the terminal; acquires the LPP message from the first preset message according to the terminal explicitly or implicitly indicating that the first preset message carries the LPP message therein.

It should be noted that the first preset message includes at least one of: an uplink information transfer message, an RRC setup complete message, and an RRC reconfiguration complete message.

The above specific communication process is as follows:
Step S51: the terminal directly provides the LPP message generated for the local location management function entity to the RRC message processing function entity;
Step S52: the RRC processing entity of the terminal packages the LPP message in an existing UL information transfer message, an RRC setup complete message or an RRC reconfiguration complete message, and explicitly or implicitly indicates LPP PDU and sends the same to the access network equipment;
Step S53: when receiving the message sent by the terminal, the access network equipment forwards the location information (an LPP data package) therein to the local location management function entity according to the explicit or implicit location information indication;
Step S54: the local LMF performs subsequent location-related processing;
Step S55: as for the location processing, specifically, for example, if it is an uplink location measurement result, location calculation will be performed according to such information; if it is auxiliary information request information, a subsequent transfer process for the auxiliary information will be initiated; and if it is terminal positioning capability information, related information will be stored.

### 2.2) Downlink processing

The access network equipment generates an LPP message for performing location information interaction with the terminal, carries the LPP message in a second preset message, and sends the second preset message to the terminal; it should be noted that, the access network equipment explicitly or implicitly indicates that the second preset message carries the LPP message therein; the terminal receives the second preset message sent by the access network equipment, and acquires the LPP message from the second preset message according to the access network equipment explicitly or implicitly indicating that the second preset message carries the LPP message therein.

It should be noted that, the second preset message includes at least one of: a downlink information transfer message, an RRC setup message, and an RRC reconfiguration message.

The above specific communication process is as follows:
Step S61: when the local LFM needs to interact with the terminal for location information, it generates a corresponding LPP message and directly provides the same to the RRC message processing function entity;
Step S62: the access network equipment bears the LPP message in a form of a container in an existing DL information transfer message, an RRC setup message or an RRC reconfiguration message, and carries explicit or implicit indication as location-related information, and then sends the same to the terminal;
Step S63: the RRC processing unit of the terminal parses the location information (an LPP data package) therein from the RRC message, and forwards it to the location processing unit;
Step S64: the location processing unit performs subsequent location-related processing. Specifically, for example: initiating uplink location measurement; or storing related location auxiliary information, etc.; if the UE positioning capability information is requested, the subsequent positioning capability reporting process will be performed.

III. When the terminal sends an uplink LPP message, it uses NAS packaging plus preset bit RRC indication; after the access network equipment receives it, it does not need to view the NAS encapsulation and directly forwards it to the local LMF for processing.

### 1. Uplink processing

When the terminal needs to interact with the access network equipment for information, it generates an LPP message for location information interaction with the access network equipment, packages the LPP message in a non-access stratum protocol data unit; contains the non-access stratum protocol data unit in a form of a container in the first preset message, and sends the first preset message to the access network equipment; the access network equipment receives the first preset message sent by the terminal, acquires the LPP message from the first preset message according to the local location information indication information of a first preset bit; it should be noted that the first preset message includes the location information indication of the first preset bit therein.

For example, the first preset bit is 1 bit.

Specifically, the first preset message includes at least one of: an uplink information transfer message, a radio resource control (RRC) setup complete message, and an RRC reconfiguration complete message.

The above specific communication process is as follows:
Step S71: the terminal generates a corresponding LPP message and then packages the LPP message in NAS PDU;
Step S72: the terminal forwards this NAS PDU to the RRC processing entity which contains this PDU in a form of container in a UL information transfer message, an RRC setup complete message, or an RRC reconfiguration complete message, and introduces 1 bit RRC information indication so as to indicate that it is the local location-related information, and sends the same to the access network equipment;
Step S73: the access network equipment receives this message, and directly provides the PDU to the local location management function for processing if the RRC message contains the NAS information and contains the 1 bit RRC information indication;
Step S74: the local location management function directly parses the LPP message therein and performs subsequent location-related processing;
Step S75: as for the location processing, specifically, for example, if it is an uplink location measurement result, location calculation will be performed according to such information; if it is auxiliary information request information, a subsequent transfer process for the auxiliary information will be initiated; and if it is terminal positioning capability information, related information will be stored.

### 2. Downlink processing

When the access network equipment needs to perform information interaction with the terminal, it generates an LPP message for performing location information interaction with the terminal, packages the LPP message, in a non-access stratum protocol data unit, contains the non-access stratum protocol data unit in a form of a container in a second preset message, and sends the second preset message to the terminal; the terminal receives the second preset message sent by the access network equipment, and parses the LPP message in the second preset message according to the location information indication information of the second preset bit; it should be noted that, the second preset message includes the location information indication information of the second preset bit.

For example, the second preset bit is 1 bit.

Specifically, the second preset message includes at least one of: a downlink information transfer message, an RRC setup message, and an RRC reconfiguration message.

The above specific communication process is as follows:
Step S81: when the local LMF needs to perform location information interaction with the terminal, it will generate a corresponding LPP message, and then directly packages the LPP message in NAS PDU;
Step S82: the access network equipment forwards this NAS PDU to an RRC processing entity which contains this PDU in a form of a container in a DL information transfer message, an RRC setup message, or an RRC reconfiguration message, and introduces a 1 bit RRC information indication and then sends the same to the terminal through the SRB 1/SRB2;
Step S83: the terminal parses the NAS PDU from the received message according to the 1 bit RRC information indication and directly provides it to the location management function unit for processing;
Step S84: the location processing unit directly parses the LPP message from the PDU and performs subsequent location-related processing; specifically, for example: initiating uplink location measurement; or storing related location auxiliary information, etc.; if the terminal positioning capability information is requested, the subsequent positioning capability reporting process will be performed.

It should be further noted that, the access network equipment indicates for the core network equipment that the access network equipment supports the local location management function during the connection establishment process with the core network equipment.

Specifically, as shown in Fig. 5, the capability reporting communication process includes:
Step S10: the terminal indicates by 1 bit whether it supports the local location function;
A unit (such as the AMF) in the core network equipment stores the terminal location-related capability information; optionally, such information may be stored in the UDM unit;
Step S20: when initiating the NG/S1 Setup process for the core network equipment (for example, the AMF or MME), the access network equipment explicitly or implicitly indicates that it supports the local LMF function;
Step S30: the core network equipment decides a proper local LMF for performing location based service, in accordance with information such as the terminal location-related capability information, local LMF location, etc.;
Optionally, the AMF of the core network equipment may perform the above Step S30 when selecting a location management center.

Step S40: the local LMF performs location based service.

It should be noted that, the embodiment of the present disclosure can ensure that, on the network basis of the 5G location management function sinking, it is possible to provide a more secure and reliable transmission mechanism for location based services. Such implementation is simple and efficient, and can minimize the effect on the protocol stack.

As shown in Fig. 6, a method for location message transmission processing according to an embodiment of the present disclosure applied to a terminal includes:

Step 61, performing Long Term Evolution Positioning Protocol (LPP) message interaction with an access network equipment.

Optionally, the step 61 includes:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

Optionally, the step 61 includes:
receiving a second preset message sent by the access network equipment;
acquiring an LPP message in the second preset message.

Optionally, the step 61 includes:
generating an LPP message for performing location information interaction with the access network equipment;
containing the LPP message in a form of a container in a first predefined message, and sending the same to the access network equipment.

Specifically, the first predefined message includes: an uplink location transfer message.

Optionally, the step 61 includes:
receiving a second predefined message sent by the access network equipment;
acquiring an LPP message from the second predefined message.

Specifically, the second predefined message includes: a downlink location transfer message.

Optionally, the step 61 includes:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

Optionally, the step 61 includes:
receiving a second preset message sent by the access network equipment;
acquiring an LPP message from the second preset message according to the access network equipment explicitly or implicitly indicating that the second preset message carries the LPP message therein.

Optionally, the step 61 includes:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

Optionally, the step 61 includes:
receiving a second preset message sent by the access network equipment, the second preset message containing location information indication information of a second preset bit therein;
parsing an LPP message in the second preset message according to the location information indication information of the second preset bit.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the method for location message transmission processing further includes:
sending location indication information to a core network equipment, the location indication information indicating whether the terminal supports a local location function.

Wherein, in the above embodiment, all the descriptions about the terminal are applicable to the embodiment of the method for location message transmission processing applied to the terminal, and the same technical effects can also be achieved.

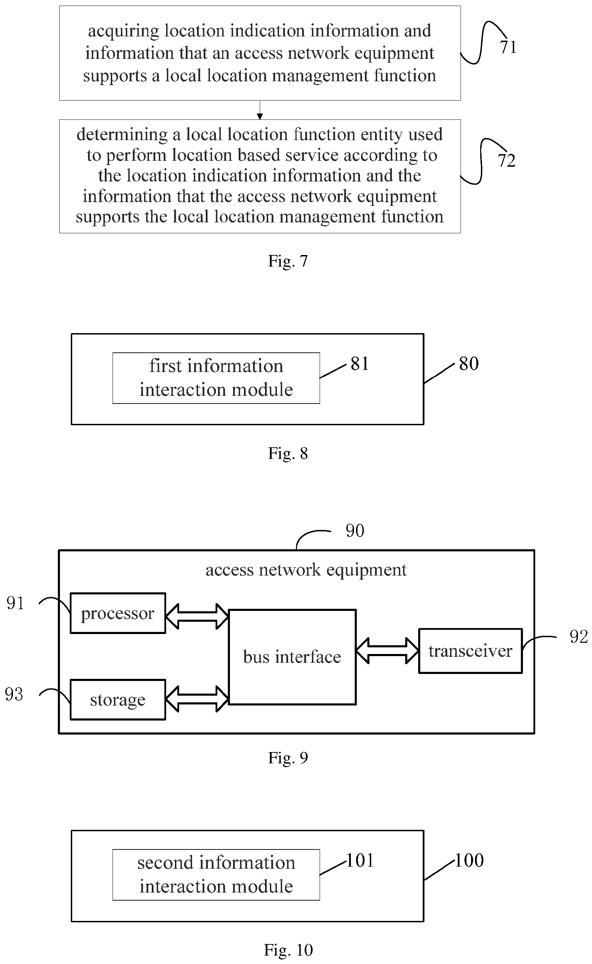

As shown in Fig. 7, a method for location message transmission processing according to an embodiment of the present disclosure applied to a core network equipment includes:
Step 71, acquiring location indication information and information that an access network equipment supports a local location management function;
Step 72, determining a local location function entity used to perform location based service according to the location indication information and the information that the access network equipment supports the local location management function;
wherein the location indication information indicates whether a terminal supports a local location function.

Wherein, in the above embodiment, all the descriptions about the core network equipment are applicable to the embodiment of the method for location message transmission processing applied to the core network equipment, and the same technical effects can also be achieved.

As shown in Fig. 8, an embodiment of the present disclosure provides an access network equipment 80 which includes:
a first information interaction module 81 configured to perform Long Term Evolution Positioning Protocol (LPP) message interaction with a terminal through a local location management function.

Optionally, the first information interaction module 81 includes:
a first reception unit configured to receive a first preset message sent by the terminal;
a first acquisition unit configured to acquire an LPP message in the first preset message when the first preset message contains non-access stratum information therein and the first preset message is related to the local location management function.

Optionally, the first information interaction module 81 includes:
a first generation unit configured to generate an LPP message for performing location information interaction with the terminal;
a second generation unit configured to generate a non-access stratum protocol data unit according to the LPP message;
a first sending unit configured to contain the non-access stratum protocol data unit in a form of a container in a second preset message, and send the second preset message to the terminal.

Optionally, the first information interaction module 81 includes:
a second reception unit configured to receive a first predefined message sent by the terminal, and acquire an LPP message from the first predefined message.

Specifically, the first predefined message includes: an uplink location transfer message.

Optionally, the first information interaction module 81 includes:
a third generation unit configured to generate an LPP message for performing location information interaction with the terminal;
a second sending unit configured to contain the LPP message in in a form of a container a second predefined message, and send the second predefined message to the terminal.

Specifically, the second predefined message includes: a downlink location transfer message.

Optionally, the first information interaction module 81 includes:
a third reception unit configured to receive a first preset message sent by the terminal;
a second acquisition unit configured to acquire an LPP message from the first preset message according to the terminal explicitly or implicitly indicating that the first preset message carries the LPP message therein.

Optionally, the first information interaction module 81 includes:
a fourth generation unit configured to generate an LPP message for performing location information interaction with the terminal;a third sending unit configured to carry the LPP message in a second preset message, and send the second preset message to the terminal;
wherein the access network equipment explicitly or implicitly indicates that the second preset message carries the LPP message therein.

Optionally, the first information interaction module 81 includes:
a fourth reception unit configured to receive a first preset message sent by the terminal, the first preset message containing local location information indication information of a first preset bit therein;
a third acquisition unit configured to acquire an LPP message from the first preset message according to the local location information indication information of the first preset bit.

Optionally, the first information interaction module 81 includes:
a fifth generation unit configured to generate an LPP message for performing location information interaction with the terminal;
a first packaging unit configured to package the LPP message in a non-access stratum protocol data unit;
a fourth sending unit configured to contain the non-access stratum protocol data unit in a form of a container in a second preset message, and send the second preset message to the terminal;
wherein the second preset message contains location information indication information of a second preset bit therein.

Specifically, the first preset message includes at least one of: an uplink information transfer message, a radio resource control (RRC) setup complete message, and an RRC reconfiguration complete message.

specifically. the second preset message includes at least one of: a downlink information transfer message, an RRC setup message, and an RRC reconfiguration message.

Optionally, the access network equipment further includes:
an indication module configured to, in a process of connection establishment with a core network equipment, indicate for the core network equipment that the access network equipment supports the local location management function.

It should be noted that, this access network equipment embodiment is an access network equipment corresponding to the above method embodiment, and all implementations in the above method embodiment are applicable to the embodiment of the access network equipment, and the same technical effects can also be achieved.

As shown in Fig. 9, an embodiment of the present disclosure further provides an access network equipment 90 which includes a processor 91, a transceiver 92, a storage 93, and a program stored on the storage 93 and capable of running on the processor 91; wherein the transceiver 92 is connected to the processor 91 and the storage 93 through a bus interface, wherein the processor 91 is used to read the program in the storage and perform the following process:
performing Long Term Evolution Positioning Protocol (LPP) message interaction with a terminal through a local location management function.

It should be noted that, in Fig. 9, the bus architecture may include any number of interconnected buses and bridges, which are linked together specifically by various circuits such as one or more processors represented by the processor 91 and the storage represented by the storage 93. The bus architecture can also link various other circuits such as peripheral devices, voltage regulators, and power management circuits, etc., which are well known in the art, and therefore, they will not be further described herein. The bus interface provides interfaces. The transceiver 92 may be a plurality of elements, including a transmitter and a receiver, and provides units for communicating with various other devices on a transmission medium. The processor 91 is responsible for managing the bus architecture and general processing, and the storage 93 may store data used by the processor 91 when performing operations.

Optionally, the processor implements the following steps when executing the program:
receiving a first preset message sent by the terminal;
acquiring an LPP message in the first preset message when the first preset message contains non-access stratum information therein and the first preset message is related to the local location management function.

Optionally, the processor implements the following steps when executing the program:
generating an LPP message for performing location information interaction with the terminal;
generating a non-access stratum protocol data unit according to the LPP message;
containing the non-access stratum protocol data unit in a form of a container in a second preset message, and sending the second preset message to the terminal.

Optionally, the processor implements the following step when executing the program:
receiving a first predefined message sent by the terminal, and acquiring an LPP message from the first predefined message.

Specifically, the first predefined message includes: an uplink location transfer message.

Optionally, the processor implements the following steps when executing the program:
generating an LPP message for performing location information interaction with the terminal;
containing the LPP message in in a form of a container a second predefined message, and sending the second predefined message to the terminal.

Specifically, the second predefined message includes: a downlink location transfer message.

Optionally, the processor implements the following steps when executing the program:
receiving a first preset message sent by the terminal;
acquiring an LPP message from the first preset message according to the terminal explicitly or implicitly indicating that the first preset message carries the LPP message therein.

Optionally, the processor implements the following steps when executing the program:
generating an LPP message for performing location information interaction with the terminal;
carrying the LPP message in a second preset message, and sending the second preset message to the terminal;
wherein the access network equipment explicitly or implicitly indicates that the second preset message carries the LPP message therein.

Optionally, the processor implements the following steps when executing the program:
receiving a first preset message sent by the terminal, the first preset message containing local location information indication information of a first preset bit therein;
acquiring an LPP message from the first preset message according to the local location information indication information of the first preset bit.

Optionally, the processor implements the following steps when executing the program:
generating an LPP message for performing location information interaction with the terminal;
packaging the LPP message in a non-access stratum protocol data unit;
containing the non-access stratum protocol data unit in a form of a container in a second preset message, and sending the second preset message to the terminal;
wherein the second preset message contains location information indication information of a second preset bit therein.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the processor implements the following step when executing the program:
in a process of connection establishment with a core network equipment, indicating for the core network equipment that the access network equipment supports the local location management function.

Wherein, the access network equipment may be a base station (Base Transceiver Station, BTS) in Global System of Mobile communication (GSM) or Code Division Multiple Access (CDMA), or may be a base station (NodeB, NB) in (Wideband Code Division Multiple Access, WCDMA), or may also be a base station (Evolutional Node B, eNB or eNodeB) in LTE, or a relay station or access point, or a base station in a future 5G network etc., which is not limited here.

An embodiment of the present disclosure further provides a computer readable storage medium having a computer program stored thereon, wherein the computer program implements, when executed by a processor, the steps of the method for location message transmission processing applied to an access network equipment.

As shown in Fig. 10, an embodiment of the present disclosure provides a terminal 100 which includes:
a second information interaction module 101 configured to perform Long Term Evolution Positioning Protocol (LPP) message interaction with an access network equipment.

Optionally, the second information interaction module 101 includes:
a sixth generation unit configured to generate an LPP message for performing location information interaction with the access network equipment;
a second packaging unit configured to package the LPP message in a non-access stratum protocol data unit;
a fifth sending unit configured to contain the non-access stratum protocol data unit in a form of a container in a first preset message, and send the first preset message to the access network equipment.

Optionally, the second information interaction module 101 includes:
a fifth reception unit configured to receive a second preset message sent by the access network equipment;
a fourth acquisition unit configured to acquire an LPP message in the second preset message.

Optionally, the second information interaction module 101 includes:
a seventh generation unit configured to generate an LPP message for performing location information interaction with the access network equipment;
a sixth sending unit configured to contain the LPP message in a form of a container in a first predefined message, and send the same to the access network equipment.

Specifically, the first predefined message includes: an uplink location transfer message.

Optionally, the second information interaction module 101 includes:
a sixth reception unit configured to receive a second predefined message sent by the access network equipment;
a fifth acquisition unit configured to acquire an LPP message from the second predefined message.

Specifically, the second predefined message includes: a downlink location transfer message.

Optionally, the second information interaction module 101 includes:
an eighth generation unit configured to generate an LPP message for performing location information interaction with the access network equipment;
a seventh sending unit configured to package the LPP message in a first preset message, and send the first preset message to the access network equipment;
wherein the terminal explicitly or implicitly indicates that the first preset message carries the LPP message therein.

Optionally, the second information interaction module 101 includes:
a seventh reception unit configured to receive a second preset message sent by the access network equipment;
a sixth acquisition unit configured to acquire an LPP message from the second preset message according to the access network equipment explicitly or implicitly indicating that the second preset message carries the LPP message therein.

Optionally, the second information interaction module 101 includes:
a ninth generation unit configured to generate an LPP message for performing location information interaction with the access network equipment;
a third packaging unit configured to package the LPP message in a non-access stratum protocol data unit;
an eighth sending unit configured to contain the non-access stratum protocol data unit in a form of a container in a first preset message, and sending the first preset message to the access network equipment;
wherein the first preset message contains location information indication information of a first preset bit therein.

Optionally, the second information interaction module 101 includes:
an eighth reception unit configured to receive a second preset message sent by the access network equipment, the second preset message containing location information indication information of a second preset bit therein;
a parsing unit configured to parse an LPP message in the second preset message according to the location information indication information of the second preset bit.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the terminal further includes:
a location indication sending module configured to send location indication information to a core network equipment, the location indication information indicating whether the terminal supports a local location function.

It should be noted that, this terminal embodiment is a terminal corresponding to the above method embodiment, and all implementations in the above method embodiment are applicable to the embodiment of the terminal, and the same technical effects can also be achieved.

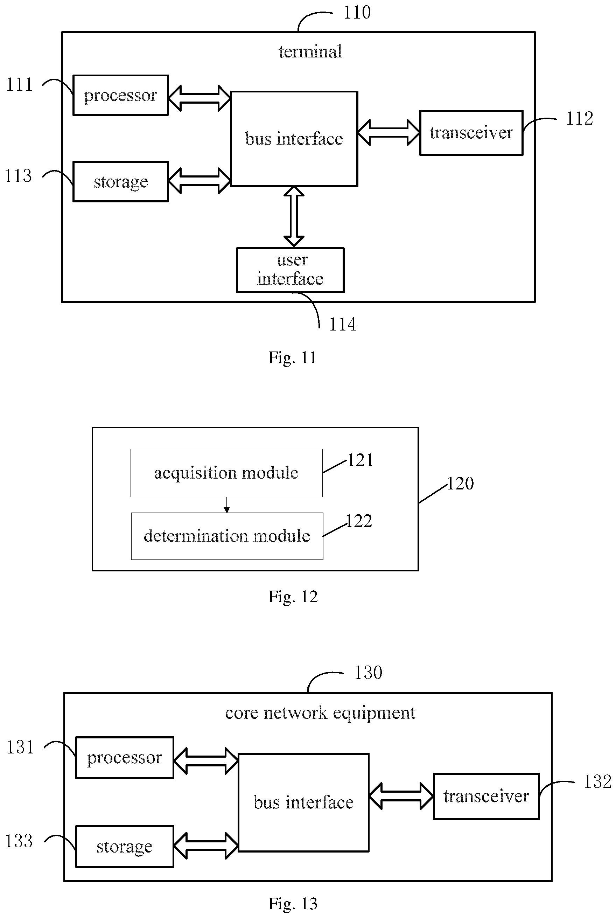

As shown in Fig. 11, an embodiment of the present disclosure further provides a terminal 110 which includes a processor 111, a transceiver 112, a storage 113, and a program stored on the storage 113 and capable of running on the processor 111; wherein the transceiver 112 is connected to the processor 111 and the storage 113 through a bus interface, wherein the processor 111 is used to read the program in the storage and perform the following process:
performing Long Term Evolution Positioning Protocol (LPP) message interaction with an access network equipment.

It should be noted that, in Fig. 11, the bus architecture may include any number of interconnected buses and bridges, which are linked together specifically by various circuits such as one or more processors represented by the processor 111 and the storage represented by the storage 113. The bus architecture can also link various other circuits such as peripheral devices, voltage regulators, and power management circuits, etc., which are well known in the art, and therefore, they will not be further described herein. The bus interface provides interfaces. The transceiver 112 may be a plurality of elements, including a transmitter and a receiver, and provides units for communicating with various other devices on a transmission medium. For different terminals, the user interface 114 may also be an interface capable of connecting externally and internally with required devices. The connected devices include but not limited to a keypad, a display, a speaker, a microphone, a joystick, and the like. The processor 111 is responsible for managing the bus architecture and general processing, and the storage 113 may store data used by the processor 111 when performing operations.

Optionally, the processor implements the following steps when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

Optionally, the processor implements the following steps when executing the program:
receiving a second preset message sent by the access network equipment;
acquiring an LPP message in the second preset message.

Optionally, the processor implements the following steps when executing the program:
generating an LPP message for performing location information interaction with the access network equipment;
containing the LPP message in a form of a container in a first predefined message, and sending the same to the access network equipment.

Specifically, the first predefined message includes: an uplink location transfer message.

Optionally, the processor implements the following steps when executing the program:
receiving a second predefined message sent by the access network equipment;
acquiring an LPP message from the second predefined message.

Specifically, the second predefined message includes: a downlink location transfer message.

Optionally, the processor implements the following steps when executing the program:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

Optionally, the processor implements the following steps when executing the program:
receiving a second preset message sent by the access network equipment;
acquiring an LPP message from the second preset message according to the access network equipment explicitly or implicitly indicating that the second preset message carries the LPP message therein.

Optionally, the processor implements the following steps when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

Optionally, the processor implements the following steps when executing the program:
receiving a second preset message sent by the access network equipment, the second preset message containing location information indication information of a second preset bit therein;
parsing an LPP message in the second preset message according to the location information indication information of the second preset bit.

Specifically, the first preset message includes at least one of: an uplink information transfer message, a radio resource control (RRC) setup complete message, and an RRC reconfiguration complete message.

Specifically, the second preset message includes at least one of: a downlink information transfer message, an RRC setup message, and an RRC reconfiguration message.

Optionally, the processor implements the following steps when executing the program:
sending location indication information to a core network equipment, the location indication information indicating whether the terminal supports a local location function.

An embodiment of the present disclosure further provides a computer readable storage medium having a computer program stored thereon, wherein the computer program implements, when executed by a processor, the steps of the method for location message transmission processing applied to a terminal.

As shown in Fig. 12, an embodiment of the present disclosure provides a core network equipment 120 which includes:
an acquisition module 121 configured to acquire location indication information and information that an access network equipment supports a local location management function;
a determination module 122 configured to determine a local location function entity used to perform location based service according to the location indication information and the information that the access network equipment supports the local location management function;
wherein the location indication information indicates whether a terminal supports a local location function.

It should be noted that, this core network equipment embodiment is a core network equipment corresponding to the above method embodiment, and all implementations in the above method embodiment are applicable to the embodiment of the core network equipment, and the same technical effects can also be achieved.

As shown in Fig. 13, an embodiment of the present disclosure further provides a core network equipment 130 which includes a processor 131, a transceiver 132, a storage 113, and a program stored on the storage 133 and capable of running on the processor 131; wherein the transceiver 132 is connected to the processor 131 and the storage 133 through a bus interface, wherein the processor 131 is used to read the program in the storage and perform the following process:
acquiring location indication information and information that an access network equipment supports a local location management function;
determining a local location function entity used to perform location based service according to the location indication information and the information that the access network equipment supports the local location management function;
wherein the location indication information indicates whether a terminal supports a local location function.

It should be noted that, in Fig. 13, the bus architecture may include any number of interconnected buses and bridges, which are linked together specifically by various circuits such as one or more processors represented by the processor 131 and the storage represented by the storage 133. The bus architecture can also link various other circuits such as peripheral devices, voltage regulators, and power management circuits, etc., which are well known in the art, and therefore, they will not be further described herein. The bus interface provides interfaces. The transceiver 132 may be a plurality of elements, including a transmitter and a receiver, and provides units for communicating with various other devices on a transmission medium. The processor 131 is responsible for managing the bus architecture and general processing, and the storage 133 may store data used by the processor 1311 when performing operations.

An embodiment of the present disclosure further provides a computer readable storage medium having a computer program stored thereon, wherein the computer program implements, when executed by a processor, the steps of the method for location message transmission processing applied to a core network equipment.

It will be appreciated that, these embodiments described in the embodiments of the present disclosure may be implemented by hardware, software, firmware, middleware, microcode, or a combination thereof. For hardware implementations, the processing unit may be implemented in one or more Application Specific Integrated Circuits (ASICs), Digital Signal Processors (DSPs), DSP Devices (DSPDs), Programmable Logic Devices (PLDs), Field-Programmable Gate Arrays (FPGAs), general-purpose processors, controllers, microcontrollers, microprocessors, other electronic units for performing the functions described in this disclosure, or a combination thereof.

As for software implementations, the techniques described in the embodiments of the present disclosure may be implemented by modules (for example, processes, functions, etc.) that perform the functions described in the embodiments of the present disclosure. The software codes may be stored in a storage and executed by a processor. The storage may be implemented in the processor or external to the processor.

In addition, the functional units in the various embodiments of the present disclosure may be integrated into one processing unit, or may be units separated physically, or two or more units may be integrated into one unit.

If the functions are implemented in the form of software functional units and sold or used as an independent product, they may be stored in a computer readable storage medium. Based on such an understanding, the essential technical solutions of the present disclosure, or part of the technical solutions that contributes to the related art, or a part of the technical solutions can be embodied in the form of a software product; the computer software product is stored in a storage medium, including several instructions used to cause a computer device (which may be a personal computer, a server, or a network equipment, etc.) to perform all or part of the steps of the methods described in various embodiments of the present disclosure. The aforementioned storage medium include various media that can store program codes, such as: a U disk, a mobile hard disk, a Read-Only Memory (ROM), a Random Access Memory (RAM), a magnetic disk, or an optical disk, etc.

The above are optional embodiments of the present disclosure. It should be noted that, for those of ordinary skill in the art, several improvements and modifications can be made without departing from the principles described in this disclosure, and these improvements and modifications are also within the protective scope of this disclosure.

## Claims

1. A method for location message transmission processing applied to an access network equipment, comprising:
performing LTE Positioning Protocol (LPP) message interaction with a terminal through a local location management function.

2. The method for location message transmission processing according to claim 1, wherein the performing LTE Positioning Protocol (LPP) message interaction with the terminal comprises:
receiving a first preset message sent by the terminal;
acquiring an LPP message in the first preset message when the first preset message contains non-access stratum information therein and the first preset message is related to the local location management function.

3. The method for location message transmission processing according to claim 1, wherein the performing LTE Positioning Protocol (LPP) message interaction with the terminal comprises:
generating an LPP message for performing location information interaction with the terminal;
generating a non-access stratum protocol data unit according to the LPP message;
containing the non-access stratum protocol data unit in a form of a container in a second preset message, and sending the second preset message to the terminal.

4. The method for location message transmission processing according to claim 1, wherein the performing LTE Positioning Protocol (LPP) message interaction with the terminal comprises:
receiving a first predefined message sent by the terminal, and acquiring an LPP message from the first predefined message.

5. The method for location message transmission processing according to claim 4, wherein the first predefined message comprises: an uplink location transfer message.

6. The method for location message transmission processing according to claim 1, wherein the performing LTE Positioning Protocol (LPP) message interaction with the terminal comprises:
generating an LPP message for performing location information interaction with the terminal;
containing the LPP message in in a form of a container a second predefined message, and sending the second predefined message to the terminal.

7. The method for location message transmission processing according to claim 6, wherein the second predefined message comprises: a downlink location transfer message.

8. The method for location message transmission processing according to claim 1, wherein the performing LTE Positioning Protocol (LPP) message interaction with the terminal comprises:
receiving a first preset message sent by the terminal;
acquiring an LPP message from the first preset message according to the terminal explicitly or implicitly indicating that the first preset message carries the LPP message therein.

9. The method for location message transmission processing according to claim 1, wherein the performing LTE Positioning Protocol (LPP) message interaction with the terminal comprises:
generating an LPP message for performing location information interaction with the terminal;
carrying the LPP message in a second preset message, and sending the second preset message to the terminal;
wherein the access network equipment explicitly or implicitly indicates that the second preset message carries the LPP message therein.

10. The method for location message transmission processing according to claim 1, wherein the performing LTE Positioning Protocol (LPP) message interaction with the terminal comprises:
receiving a first preset message sent by the terminal, the first preset message containing local location information indication information of a first preset bit therein;
acquiring an LPP message from the first preset message according to the local location information indication information of the first preset bit.

11. The method for location message transmission processing according to claim 1, wherein the performing LTE Positioning Protocol (LPP) message interaction with the terminal comprises:
generating an LPP message for performing location information interaction with the terminal;
packaging the LPP message in a non-access stratum protocol data unit;
containing the non-access stratum protocol data unit in a form of a container in a second preset message, and sending the second preset message to the terminal;
wherein the second preset message contains location information indication information of a second preset bit therein.

12. The method for location message transmission processing according to any of claims 2, 8, and 10, wherein the first preset message comprises at least one of: an uplink information transfer message, a radio resource control (RRC) setup complete message, and an RRC reconfiguration complete message.

13. The method for location message transmission processing according to any of claims 3, 9 and 11, wherein the second preset message comprises at least one of: a downlink information transfer message, an RRC setup message, and an RRC reconfiguration message.

14. The method for location message transmission processing according to claim 1, wherein the method for location message transmission processing further comprises:
in a process of connection establishment with a core network equipment, indicating for the core network equipment that the access network equipment supports the local location management function.

15. A method for location message transmission processing applied to a terminal, comprising:
performing LTE Positioning Protocol (LPP) message interaction with an access network equipment.

16. The method for location message transmission processing according to claim 15, wherein the performing LTE Positioning Protocol (LPP) message interaction with the access network equipment comprises:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

17. The method for location message transmission processing according to claim 15, wherein the performing LTE Positioning Protocol (LPP) message interaction with the access network equipment comprises:
receiving a second preset message sent by the access network equipment;
acquiring an LPP message in the second preset message.

18. The method for location message transmission processing according to claim 15, wherein the performing LTE Positioning Protocol (LPP) message interaction with the access network equipment comprises:
generating an LPP message for performing location information interaction with the access network equipment;
containing the LPP message in a form of a container in a first predefined message, and sending the same to the access network equipment.

19. The method for location message transmission processing according to claim 18, wherein the first predefined message comprises: an uplink location transfer message.

20. The method for location message transmission processing according to claim 15, wherein the performing LTE Positioning Protocol (LPP) message interaction with the access network equipment comprises:
receiving a second predefined message sent by the access network equipment;
acquiring an LPP message from the second predefined message.

21. The method for location message transmission processing according to claim 20, wherein the second predefined message comprises: a downlink location transfer message.

22. The method for location message transmission processing according to claim 15, wherein the performing LTE Positioning Protocol (LPP) message interaction with the access network equipment comprises:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

23. The method for location message transmission processing according to claim 15, wherein the performing LTE Positioning Protocol (LPP) message interaction with the access network equipment comprises:
receiving a second preset message sent by the access network equipment;
acquiring an LPP message from the second preset message according to the access network equipment explicitly or implicitly indicating that the second preset message carries the LPP message therein.

24. The method for location message transmission processing according to claim 15, wherein the performing LTE Positioning Protocol (LPP) message interaction with the access network equipment comprises:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

25. The method for location message transmission processing according to claim 15, wherein the performing LTE Positioning Protocol (LPP) message interaction with the access network equipment comprises:
receiving a second preset message sent by the access network equipment, the second preset message containing location information indication information of a second preset bit therein;
parsing an LPP message in the second preset message according to the location information indication information of the second preset bit.

26. The method for location message transmission processing according to any of claims 16, 22 and 24, wherein the first preset message comprises at least one of: an uplink information transfer message, a radio resource control (RRC) setup complete message, and an RRC reconfiguration complete message.

27. The method for location message transmission processing according to any of claims 17, 23 and 25, wherein the second preset message comprises at least one of: a downlink information transfer message, an RRC setup message, and an RRC reconfiguration message.

28. The method for location message transmission processing according to claim 15, wherein it further comprises:
sending location indication information to a core network equipment, the location indication information indicating whether the terminal supports a local location function.

29. A method for location message transmission processing applied to a core network equipment, comprising:
acquiring location indication information and information that an access network equipment supports a local location management function;
determining a local location function entity used to perform location based service according to the location indication information and the information that the access network equipment supports the local location management function;
wherein the location indication information indicates whether a terminal supports a local location function.

30. An access network equipment, comprising a storage, a processor, and a program stored on the storage and capable of running on the processor; wherein the processor implements steps as follows when executing the program:
performing LTE Positioning Protocol (LPP) message interaction with a terminal through a local location management function.

31. The access network equipment according to claim 30, wherein the processor implements steps as follows when executing the program:
receiving a first preset message sent by the terminal;
acquiring an LPP message in the first preset message when the first preset message contains non-access stratum information and the first preset message is related to the local location management function.

32. The access network equipment according to claim 30, wherein the processor implements steps as follows when executing the program:
generating an LPP message for performing location information interaction with the terminal;
generating a non-access stratum protocol data unit according to the LPP message;
containing the non-access stratum protocol data unit in a form of a container in a second preset message, and sending the second preset message to the terminal.

33. The access network equipment according to claim 30, wherein the processor implements steps as follows when executing the program:
receiving a first predefined message sent by the terminal, and acquiring an LPP message from the first predefined message.

34. The access network equipment according to claim 33, wherein the first predefined message comprises: an uplink location transfer message.

35. The access network equipment according to claim 30, wherein the processor implements steps as follows when executing the program:
generating an LPP message for performing location information interaction with the terminal;
containing the LPP message in a form of a container in a second predefined message, and sending the second predefined message to the terminal.

36. The access network equipment according to claim 35, wherein the second predefined message comprises: a downlink location transfer message.

37. The access network equipment according to claim 30, wherein the processor implements steps as follows when executing the program:
receiving a first preset message sent by the terminal;
acquiring an LPP message from the first preset message according to the terminal explicitly or implicitly indicating that the first preset message carries the LPP message therein.

38. The access network equipment according to claim 30, wherein the processor implements steps as follows when executing the program:
generating an LPP message for performing location information interaction with the terminal;
carrying the LPP message in a second preset message, and sending the second preset message to the terminal;
wherein the access network equipment explicitly or implicitly indicates that the second preset message carries the LPP message therein.

39. The access network equipment according to claim 30, wherein the processor implements steps as follows when executing the program:
receiving a first preset message sent by the terminal, the first preset message containing local location information indication information of a first preset bit therein;
acquiring an LPP message from the first preset message according to the local location information indication information of the first preset bit.

40. The access network equipment according to claim 30, wherein the processor implements steps as follows when executing the program:
generating an LPP message for performing location information interaction with the terminal;
packaging the LPP message in a non-access stratum protocol data unit;
containing the non-access stratum protocol data unit in a form of a container in a second preset message, and sending the second preset message to the terminal;
wherein the second preset message contains location information indication information of a second preset bit therein.

41. The access network equipment according to any of claims 31, 37 and 39, wherein the first preset message comprises at least one of: an uplink information transfer message, a radio resource control (RRC) setup complete message, and an RRC reconfiguration complete message.

42. The access network equipment according to any of claims 32, 38 and 40, wherein the second preset message comprises at least one of: a downlink information transfer message, an RRC setup message, and an RRC reconfiguration message.

43. The access network equipment according to claim 30, wherein the processor implements steps as follows when executing the program:
in a process of connection establishment with a core network equipment, indicating for the core network equipment that the access network equipment supports the local location management function.

44. A terminal, comprising a storage, a processor, and a program stored on the storage and capable of running on the processor; wherein the processor implements steps as follows when executing the program:
performing LTE Positioning Protocol (LPP) message interaction with an access network equipment.

45. The terminal according to claim 44, wherein the processor implements steps as follows when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment.

46. The terminal according to claim 44, wherein the processor implements steps as follows when executing the program:
receiving a second preset message sent by the access network equipment;
acquiring an LPP message in the second preset message.

47. The terminal according to claim 44, wherein the processor implements steps as follows when executing the program:
generating an LPP message for performing location information interaction with the access network equipment;
containing the LPP message in a form of a container in a first predefined message, and sending the same to the access network equipment.

48. The terminal according to claim 47, wherein the first predefined message comprises: an uplink location transfer message.

49. The terminal according to claim 44, wherein the processor implements steps as follows when executing the program:
receiving a second predefined message sent by the access network equipment;
acquiring an LPP message from the second predefined message.

50. The terminal according to claim 49, wherein the second predefined message comprises: a downlink location transfer message.

51. The terminal according to claim 44, wherein the processor implements steps as follows when executing the program:
generating an LPP message for performing location information interaction with the access network equipment;
packaging the LPP message in a first preset message, and sending the first preset message to the access network equipment;
wherein the terminal explicitly or implicitly indicates that the first preset message carries the LPP message therein.

52. The terminal according to claim 44, wherein the processor implements steps as follows when executing the program:
receiving a second preset message sent by the access network equipment;
acquiring an LPP message from the second preset message according to the access network equipment explicitly or implicitly indicating that the second preset message carries the LPP message therein.

53. The terminal according to claim 44, wherein the processor implements steps as follows when executing the program:
generating an LPP message for performing location information interaction with the access network equipment;
packaging the LPP message in a non-access stratum protocol data unit;
containing the non-access stratum protocol data unit in a form of a container in a first preset message, and sending the first preset message to the access network equipment;
wherein the first preset message contains location information indication information of a first preset bit therein.

54. The terminal according to claim 44, wherein the processor implements steps as follows when executing the program:
receiving a second preset message sent by the access network equipment, the second preset message containing location information indication information of a second preset bit therein;
parsing an LPP message in the second preset message according to the location information indication information of the second preset bit.

55. The terminal according to any of claims 45, 51 and 53, wherein the first preset message comprises at least one of: an uplink information transfer message, a radio resource control (RRC) setup complete message, and an RRC reconfiguration complete message.

56. The terminal according to any of claims 46, 52 and 54, wherein the second preset message comprises at least one of: a downlink information transfer message, an RRC setup message, and an RRC reconfiguration message.

57. The terminal according to claim 44, wherein the processor implements steps as follows when executing the program:
sending location indication information to a core network equipment, the location indication information indicating whether the terminal supports a local location function.

58. A core network equipment, comprising a storage, a processor, and a program stored on the storage and capable of running on the processor; wherein the processor implements steps as follows when executing the program:
acquiring location indication information and information that an access network equipment supports a local location management function;
determining a local location function entity used to perform location based service according to the location indication information and the information that the access network equipment supports the local location management function;
wherein the location indication information indicates whether a terminal supports a local location function.

59. A computer readable storage medium having a computer program stored thereon, the computer program implementing, when executed by a processor, the method for location message transmission processing according to any of claims 1 to 29.

60. An access network equipment, comprising:
a first information interaction module configured to perform LTE Positioning Protocol (LPP) message interaction with a terminal through a local location management function.

61. A terminal, comprising:
a second information interaction module configured to perform LTE Positioning Protocol (LPP) message interaction with an access network equipment.

62. A core network equipment, comprising:
an acquisition module configured to acquire location indication information and information that an access network equipment supports a local location management function;
a determination module configured to determine a local location function entity used to perform location based service according to the location indication information and the information that the access network equipment supports the local location management function;
wherein the location indication information indicates whether a terminal supports a local location function.
